# EUROPÄISCHE PATENTANMELDUNG

(11) **EP 1 442 650 A1**
(43) Veröffentlichungstag der Anmeldung: **04.08.2004**
(21) Anmeldenummer: 04100334.4
(22) Anmeldetag: 30.01.2004
(51) Int. Cl.: A01D 63/04

(54) **Halmteiler**

(30) Priorität: 01.02.2003 DE 10303990
(71) Anmelder: DEERE & COMPANY, Moline, Illinois 61265-8098 (US)
(72) Erfinder: Weichholdt, Dirk, 57200, Sarreguemines (FR)
(74) Vertreter: Holst, Sönke, Dr.

(57) **Zusammenfassung**

Die Erfindung bezieht sich auf einen Halmteiler (20) für eine Erntegutbergungsvorrichtung (10), mit einem Abweiser (30), der mittels eines Gelenks (22) um eine Schwenkachse (24) zwischen einer Betriebsstellung und einer Transportstellung verschwenkbar und in der Betriebsstellung durch ein Rastelement (56) arretierbar ist.

Um einen Halmteiler (20) bereitzustellen, der in der Betriebsstellung möglichst wenig Spiel aufweist, an dem sich aber auch nur wenig Getreidehalme verfangen können, wird vorgeschlagen, dass das Rastelement (56) in der Betriebsstellung das Gelenk (22) umschließt und auf diese Weise arretiert.

## Beschreibung

Die Erfindung betrifft einen Halmteiler für eine Erntegutbergungsvorrichtung, mit einem Abweiser, der mittels eines Trägers, in dem ein Gelenk angeordnet ist, an der Erntegutbergungsvorrichtung anbringbar ist, wobei das Gelenk durch ein Rastelement arretierbar ist.

In der DE 1 926 441 A wird ein Halmteiler beschrieben, der durch ein Gelenk schwenkbar an einem Schneidwerk angebracht ist. Zur Arretierung wird ein federvorgespannter Keil zwischen den schneidwerksfesten und den verschwenkenden Teil des Halmteilerträgerrohrs geschoben. Bei einer anderen Ausführungsform wird der Keil an die einschwenkende Seite des Gelenks geschoben.

Die DD 128 878 A zeigt einen anderen Halmteiler. Er wird in seiner Arbeitsstellung im Abstand vom Gelenk durch eine Hülse, die auf einen ortsfesten Stift geschoben wird, arretiert.

Die nachveröffentlichte DE 101 46 768 A schlägt einen Halmteiler vor, der über ein schwenkbares Gelenk am Schneidwerk eines Mähdreschers befestigt ist. Zur Arretierung dient ein verschiebbares Sperrelement, das innerhalb eines den Halmteiler haltenden Rohrs gelagert ist und durch Federkraft in eine Rastausnehmung im gegenüber dem verschiebbaren Element verschwenkbaren Teil des Halmteilers gedrückt wird. Es ist ein Schlitz im Rohr vorgesehen, durch den das Sperrelement sich erstreckt, so dass es manuell gegen die Kraft der Feder aus der Rastausnehmung gezogen werden kann, um den Halmteiler verschwenken zu können.

Im Stand der Technik ist es somit bekannt, den Halmteiler durch Elemente zu arretieren, die seitlich über das Halmteilerrohr hinausragen. An diesen seitlich überstehenden Elementen können sich Getreidehalme verfangen, was zu Verstopfungen führen kann. Wenn diese Verstopfungen auftreten, kommt es zum sogenannten Schieben des Schneidwerks, was bedeutet, dass der Halmteiler nicht mehr seine Funktion erfüllt, sondern nur noch die Halme nach unten und/oder vorn drückt, so dass Verluste entstehen. Nur die DE 101 46 768 A offenbart ein Gelenk mit einem relativ schmalen Profil. Dort liegen die beweglichen Teile des Gelenks aber im Wesentlichen frei, so dass sich auch dort Erntegut ansammeln kann.

Das der Erfindung zu Grunde liegende Problem wird darin gesehen, einen verbesserten schwenkbaren Halmteiler zu schaffen, an dem sich möglichst wenig Getreidehalme verfangen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Abweiser eines Halmteilers ist durch einen Träger, in dem sich ein Gelenk befindet, mit einer Erntegutbergungsvorrichtung verbindbar. Das Gelenk ermöglicht, den Abweiser um eine Schwenkachse zwischen einer Betriebsstellung, in der er sich in der Regel in der Vorwärtsbewegungsrichtung erstreckt, und einer Transportposition zu verschwenken, in der der Abweiser insbesondere seitlich nach innen verschwenkt ist. Es wird vorgeschlagen, dass ein Rastelement das Gelenk und/oder den Träger beidseits der Schwenkachse des Gelenks einschließt, um das Gelenk in der Betriebs- und/oder Transportposition zu arretieren. In seiner Arretierposition umschließt das Rastelement das Gelenk und/oder den Träger vollständig oder zumindest so weit, dass das Gelenk sich nicht mehr bewegen kann. Teile des Rastelements sind somit auf jeder Seite der Schwenkachse angeordnet. Die auf der (bezüglich der Schwenkbewegung) innenliegenden Seite angeordneten Teile verhindern ein Schwenken des Gelenks, während die auf der Außenseite liegenden Teile das Rastelement an Ort und Stelle halten.

Auf diese Weise erreicht man eine optimale Arretierung des Gelenks, da ein Verschwenken um die Schwenkachse durch das Rastelement ausgeschlossen ist. Umschließt das Rastelement (nur oder auch) das Gelenk, erhält man einen Schutz gegen Verunreinigungen.

Es sind verschiedene Ausführungsformen des Rastelements denkbar. Es könnte in seiner Arretierposition nur das Gelenk und möglicherweise auch den Träger auf nur einer Seite des Gelenks einschließen. Dadurch erhält man einen guten Schutz für das Gelenk. Bei einer anderen Ausführungsform schließt das Gelenk in der Arretierposition (zusätzlich zum Gelenk oder - z.B. zur Materialersparnis - ausschließlich) den Träger auf beiden Seiten des Gelenks ein. Wegen der größeren wirksamen Länge des Rastelements, des daher längeren Hebelarms und der somit besseren Haltewirkung ist eine den Träger auf beiden Seiten des Gelenks einschließende Ausführungsform bevorzugt.

Das Rastelement kann durch Verschieben entlang des Trägers in eine Position verbracht werden, in der ein Verschwenken des Gelenks möglich ist. Denkbar wäre auch ein zum Bewegen des Gelenks abnehmbares Rastelement, das sich aus zwei oder mehr Teilen zusammensetzt, die zum Abnehmen voneinander trennbar oder auseinanderschwenkbar sind.

Bei einer verschiebbaren Ausführungsform bietet es sich an, das Rastelement durch eine Feder in der Arretierposition vorzuspannen. Die Feder drückt dann das Rastelement gegen ein Halteelement. Denkbar wäre aber auch die Nutzung der Schwerkraft oder eines Splints, um das Rastelement in der Arretierposition festzusetzen.

Es erweist sich als sinnvoll, das Gelenk auch in der Transportposition zu arretieren. Dazu kann ein gegenüber dem Rastelement verschwenkbares Teil des Gelenks mit einer Ausnehmung oder Aussparung versehen sein, in die sich das Rastelement in der Transportstellung erstreckt, um das Gelenk zu arretieren.

Der erfindungsgemäße Halmteiler kann an allen Arten von Erntegutbergungsvorrichtungen verwendet werden, wie Mähvorsätzen, Maisgebissen oder Pflückern. Der Erntebergungsvorsatz kann insbesondere an Erntemaschinen, wie Mähdreschern und Feldhäckslern verwendet werden. Das Gelenk mit dem Rastelement kann auch als separates Element geliefert und an separate oder bereits vorhandene Halmteiler montiert werden.

In den Zeichnungen ist ein nachfolgend näher beschriebenes Ausführungsbeispiel der Erfindung dargestellt. Es zeigt:
- Fig. 1: eine Seitenansicht einer Erntegutbergungsvorrichtung für einen Mähdrescher mit einem Halmteiler in Betriebsposition,
- Fig. 2: eine perspektivische Ansicht des Gelenks mit einem in eine Entriegelungsstellung verbrachten Riegelelement,
- Fig. 3: eine perspektivische Ansicht des Gelenks in der Transportposition,
- Fig. 4: eine perspektivische Ansicht einer Lagerhälfte des Gelenks von unten, und
- Fig. 5: eine vergrößerte Ansicht der zusammengefügten Lagerhälften des Gelenks von unten.

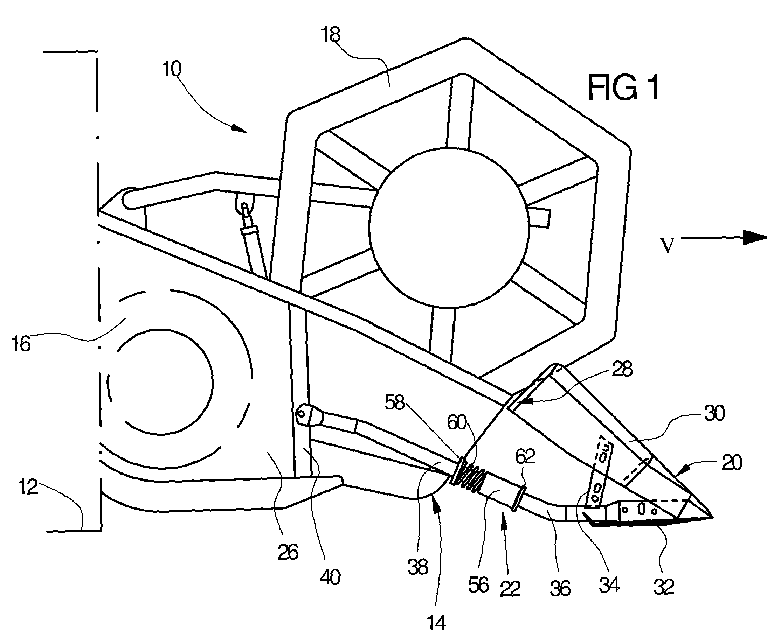

In der Figur 1 ist eine Erntegutbergungsvorrichtung 10 in Form eines Schneidwerks für einen nicht dargestellten Mähdrescher wiedergegeben, die an der Frontseite des schematisch dargestellten Schrägförderers 12 anbringbar ist. Die Erntegutbergungsvorrichtung 10 weist in an sich bekannter Weise eine querliegende Schneideinrichtung 14 auf, die aus einem Mähtisch und einem Mähbalken gebildet ist. Der Schneideinrichtung 14 ist ein Einzugsförderer 16, in der dargestellten Ausführungsform eine Querförderschnecke, zugeordnet und eine Haspel 18 mit Zinken vorgelagert. Weiterhin ist der Erntegutbergungsvorrichtung 10 ein seitlicher Halmteiler 20 vorgelagert, der in seiner Betriebsposition in Vorwärtsbewegungsrichtung V des Mähdreschers zeigt und nach vorn von der Erntegutbergungsvorrichtung 10 absteht. In der Regel sind zwei symmetrische Halmteiler 20 an beiden Seiten der Erntegutbergungsvorrichtung 10 angeordnet. An beiden Seiten der Erntegutbergungsvorrichtung 10 sind außerdem Seitenwände 26 vorgesehen, die etwa dreiecksförmig ausgebildete Frontbereiche mit Spitzen 28 aufweisen. Anzumerken ist, dass sich im Folgenden Richtungsangaben, wie vor, hinter, über, unter, seitlich, etc. auf die Vorwärtsbewegungsrichtung V beziehen.

Der Halmteiler 20 setzt sich aus einem Abweiser 30, einem Bodenblech 32, einer Stütze 34 und einem ersten Rohr 36 zusammen, das über ein Gelenk 22 an einem zweiten Rohr 38 befestigt ist, das seinerseits an einer Strebe 40 angebracht ist, die an der Seitenwand 26 der Erntegutbergungsvorrichtung 10 befestigt ist. Die Rohre 36, 38 dienen als Träger für den Abweiser 30. Der schalenförmige, mit einem Querschnitt in der Form eines umgedrehten, auf dem Kopf stehenden U versehene Abweiser 30 wird durch die Stütze 34 in seiner schräg nach oben und entgegen der Vorwärtsbewegungsrichtung V weisenden Position gegenüber dem ersten Rohr 36 fixiert. Die Stütze 34 ist am ersten Rohr 36 angeschweißt. Auch das (zum Gleiten auf dem Erdboden eingerichtete) Bodenblech 32 ist an der flachgepressten Vorderseite des ersten Rohrs 36 angebracht. Der Halmteiler 20 dient zur Abtrennung einer Bahn geernteten Gutes von der benachbarten, noch nicht geernteten Bahn. Daher ist der Abweiser 30 in seinem in Vorwärtsbewegungsrichtung V vorderen Bereich spitz geformt.

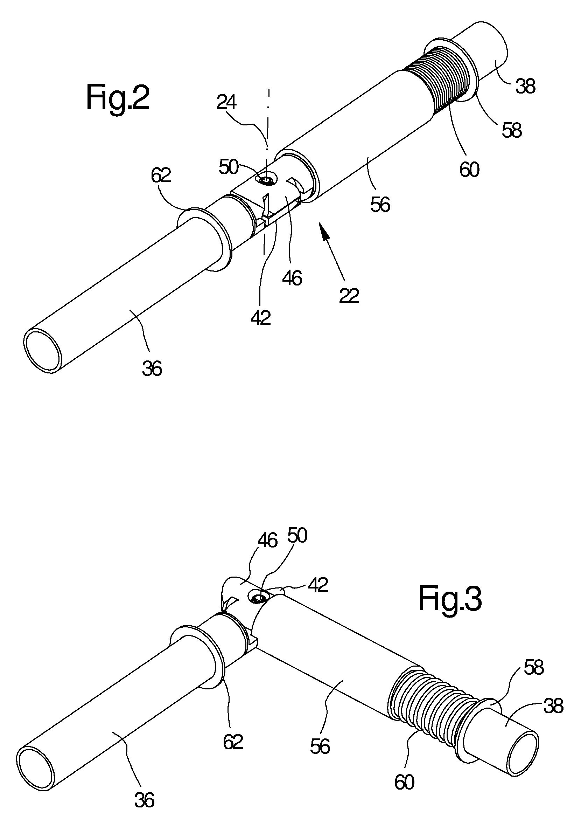

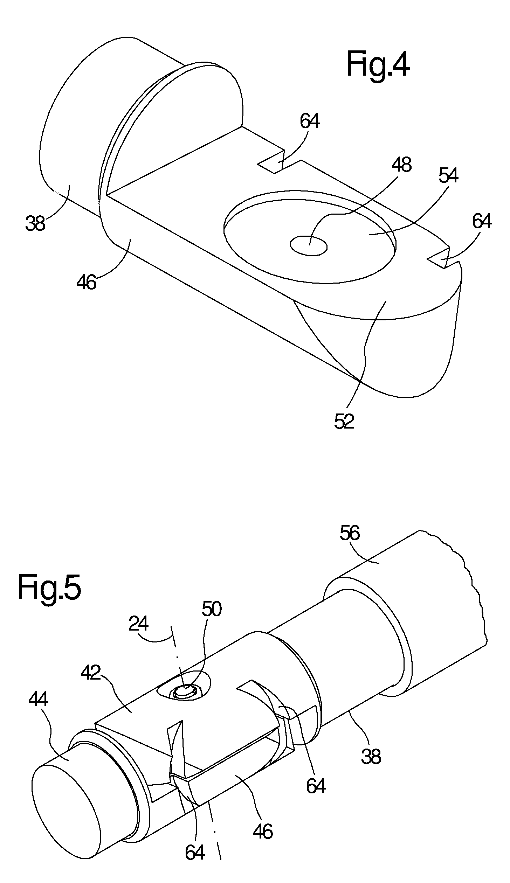

Der Halmteiler 20 und das ihn halternde erste Rohr 36 sind in den Figuren 1, 2 und 5 in der Betriebsposition wiedergegeben und in der Figur 3 in einer Transportstellung, in der der Abweiser 30 um ein Gelenk 22 mit einer Schwenkachse 24 um etwa 90° in Richtung auf die Mitte der Erntegutbergungsvorrichtung 10 zu nach innen eingeschwenkt ist. Die Schwenkachse 24 des Gelenks 22 verläuft nicht genau vertikal, sondern, wie in Figur 1 erkennbar, gegenüber der Vertikalen in Vorwärtsbewegungsrichtung V nach vorn (bezüglich der Zeichnungen im Gegenuhrzeigersinn) geneigt. In seitlicher Richtung betrachtet ist die Schwenkachse 24 senkrecht, obwohl sie auch seitlich geneigt sein könnte.

Der Aufbau des Gelenks 22 ist in den Figuren 2 bis 5 detaillierter dargestellt. Das Gelenk 22 umfasst eine erste Lagerhälfte 42, die mit dem ersten Rohr 36 verbunden ist. Dazu dient ein zylindrischer Ansatz 44, der axial in das erste Rohr 36 eingeschoben wird und z. B. durch eine Schraub-, Niet-, Löt-, Kleb-, Schweiß- und/oder Aufschrumpfverbindung daran lösbar oder unlösbar befestigt ist. Das Gelenk 22 umfasst weiterhin eine zweite Lagerhälfte 46, die ebenfalls einen - in den Figuren nicht erkennbaren, da in das zweite Rohr 38 eingeschobenen - Ansatz aufweist, der auf analog zu der Befestigung des Ansatzes 44 im ersten Rohr 36 mit dem zweiten Rohr 38 verbunden ist.

Die Lagerhälften 42, 46 sind zueinander spiegelbildlich angeordnet, jedoch identisch geformt. Die Lagerhälften 42, 46 haben die Form in der Längsmittelebene halbierter Zylinder und weisen eine mittige Bohrung 48 auf, die mit der Schwenkachse 24 zusammenfällt und durch die sich eine Schraube 50 erstreckt, die durch eine Mutter gesichert ist. Alternativ könnte auch eine Niete verwendet werden. Die aneinander zum Anliegen kommenden Flächen 52 der Lagerhälften 42, 46 sind näherungsweise plan, jedoch in der Umgebung der Bohrung 48 mit einer kreisförmigen Vertiefung 54 versehen, die zur Aufnahme einer Unterlegscheibe dient. Die Unterlegscheibe besteht vorzugsweise aus einem Material mit geringem Reibkoeffizienten, wie Teflon, und erleichtert das Verschwenken. Die Schraube 50 und die Form der Lagerhälften 42, 46 ermöglichen ein Verschwenken der ersten Lagerhälfte 42 um die Schwenkachse 24.

Zur Arretierung des Gelenks 22 in der Betriebsposition (Figur 1, 2 und 5) sowie in der Transportposition (Figur 3) dient ein hohlzylindrisches Rastelement 56, das entlang des Rohrs 38 verschiebbar auf das zweite Rohr 38 aufgesetzt ist. Zwischen dem von der Schwenkachse 24 beabstandeten Ende des Rastelements 56 und einem mit dem zweiten Rohr 38 verbundenen, kragenförmig überstehenden ersten Ring 58 ist eine schraubenförmige Feder 60 angeordnet, die das Rastelement 56 in Richtung auf die Schwenkachse 24 vorspannt. Auf diese Weise schiebt sich das Rastelement 56 in der Betriebsposition über die beiden Lagerhälften 42, 46 und kommt an einem als Halteelement dienenden zweiten Ring 62 zum Anliegen, der auf das erste Rohr 36 aufgesetzt ist und von ihm kragenförmig übersteht, so dass die Lagerhälften 42, 46 sicher aneinander arretiert sind. Da sich das Rastelement 56 über beide Rohre 36, 38 erstreckt, kann der Halmteiler 20 beim Erntebetrieb trotz der recht einfachen Lagerung im Gelenk 22 kaum unerwünschte seitliche oder vertikale Bewegungen vollführen. Außerdem schützt das Rastelement 56 die Lagerhälften 42, 46 vor Verunreinigungen durch Erntegut. Wegen des sehr wenig über die Rohre 36, 38 hinausragenden Profils des Rastelements 56 kann sich kaum Erntegut daran verfangen.

Das Rastelement 56 ist gegen die Kraft der Feder 60 von Hand in Richtung auf den ersten Ring 58 verschiebbar. Sobald das Rastelement 56 ganz von der ersten Lagerhälfte 42 abgezogen wurde, letztere somit frei liegt, kann der Halmteiler 20 mit dem ersten Rohr 36 und der ersten Lagerhälfte 42 um die Schwenkachse 24 verschwenkt werden. Sobald er in seine Transportposition gelangt ist, kann der Bediener das Rastelement 56 loslassen. Es wird dann durch die Kraft der Feder 60 in Richtung auf die zweite Lagerhälfte 46 bewegt, wo die Vorderseite des Rastelements 56 in Aussparungen 64 in der ihm zugewandten Seitenfläche der zweiten Lagerhälfte 46 eindringt. Da das Rastelement 56 durch die Feder 60 in die Aussparungen 64 gedrückt wird, ist das Gelenk 22 auch in der Transportposition arretiert. Der Bediener kann das Rastelement 56 im Übrigen auch schon loslassen, wenn das Gelenk 22 um einen Winkel von etwa 45° aus der Betriebs- in die Transportposition gedreht ist, da danach die Vorderseite des Rastelements 56 an der ihm zugewandten Fläche der zweiten Lagerhälfte 46 entlang gleitet.

Die Bewegung von der Transport- in die Betriebsposition erfolgt analog, indem das Rastelement 56 manuell aus den Aussparungen 64 abgezogen, der Halmteiler 20 um die Schwenkachse 24 verschwenkt und das Rastelement 56 manuell und/oder durch die Kraft der Feder 60 über die Lagerhälften 42, 46 geschoben wird. Es wäre auch denkbar, das Rastelement 56 in einer das Verschwenken des Halmteilers 24 ermöglichenden Position zu arretieren, z. B. durch einen Stift, der in entsprechende Öffnungen im Rastelement 56 und im zweiten Rohr 38 eingesteckt wird.

Außerdem könnte auch das zweite Rohr 38 mit dem Halmteiler 20 verbunden werden, während das erste Rohr 36 an der Erntegutbergungsvorrichtung 10 angebracht wird.

Im Ergebnis erhält man ein Gelenk 22 für einen Halmteiler 20, dass sich durch Kompaktheit, sichere Arretierung und aufgrund der schützenden Wirkung des Rastelements 56 durch lange Lebensdauer auszeichnet.

## Patentansprüche

1. Halmteiler (20) für eine Erntegutbergungsvorrichtung (10), mit einem Abweiser (30), der mittels eines Trägers, in dem ein Gelenk (22) angeordnet ist, an der Erntegutbergungsvorrichtung (10) anbringbar ist, wobei das Gelenk (22) durch ein Rastelement (56) arretierbar ist, **dadurch gekennzeichnet, dass** das Rastelement (56) in seiner Arretierposition das Gelenk (22) und/oder den Träger auf beiden Seiten der Schwenkachse (24) des Gelenks (22) einschließt und auf diese Weise arretiert.

2. Halmteiler (20) nach Anspruch 1, **dadurch gekennzeichnet, dass** das Rastelement (56) in der Arretierposition den Träger auf beiden Seiten des Gelenks (22) einschließt.

3. Halmteiler (20) nach Anspruch 1 oder 2, **dadurch gekennzeichnet, dass** das Rastelement (56) in der Längsrichtung des Trägers verschiebbar angeordnet ist.

4. Halmteiler (20) nach einem der Ansprüche 1 bis 3, **dadurch gekennzeichnet, dass** das Rastelement (56) durch die Kraft einer Feder (60) in die Arretierposition geschoben wird.

5. Halmteiler (20) nach einem der Ansprüche 1 bis 4, **dadurch gekennzeichnet, dass** das Rastelement (56) eingerichtet ist, das Gelenk (22) auch in der Transportstellung zu arretieren.

6. Halmteiler (20) nach Anspruch 5, **dadurch gekennzeichnet, dass** ein gegenüber dem Rastelement (56) bewegliches Teil des Gelenks (22) mit einer Ausnehmung (64) versehen ist, in die sich das Rastelement (56) in der Transportstellung erstreckt und das Gelenk (22) arretiert.
